# EUROPÄISCHE PATENTANMELDUNG

(11) **EP 2 088 307 A2**
(43) Veröffentlichungstag der Anmeldung: **12.08.2009**
(21) Anmeldenummer: 09001811.0
(22) Anmeldetag: 10.02.2009
(51) Int. Cl.: F02M 25/07

(54) **Akulator für eine Bypass-Regeleinrichtung eines Bypasses bei einem Wärmetauscher, Wärmetauscher oder Baueinheit mit einem oder mehreren Wärmetauschern, Bypasssystem, Fahrzeugdiagnosesystem, Abgasrückführsystem, Ladeluftzuführsystem und Verwendung des Wärmetauschers oder der Baueinheit**

(30) Priorität: 11.02.2008 DE 102008008697
(71) Anmelder: Behr GmbH & Co. KG, 70469 Stuttgart (DE); Behr Thermot-tronik GmbH, 70806 Kornwestheim (DE)
(72) Erfinder: Domes, Christian, 70619 Stuttgart (DE); Seitz, Laurenz, 71642 Ludwigsburg (DE); Friesenhahn, Waldemar, 70806 Kornwestheim (DE)

(57) **Zusammenfassung**

Die Erfindung betrifft einen Aktuator (10) für eine Wärmetausch-, insbesondere Bypass-Regeleinrichtung (4, 40), eines oder mehrerer Fluidstrecken, insbesondere umfassend einen Bypass, bei einem Wärmetauscher (1) oder einer Baueinheit mit einem oder mehreren Wärmetauschern, aufweisend: eine Aktuatoreinheit (30) und ein mit der Aktuatoreinheit (30) wirkverbundenes Betätigungsmittel (20), das zur Betätigung der Wärmetausch-, insbesondere Bypass-, Regeleinrichtung (4, 40) ausgelegt ist. Um eine Überwachung der emissionsrelevanten Bauteile, insbesondere im Schadensfall, zu ermöglichen, sieht die Erfindung eine Sensorik vor, die zur Erfassung eines Zustands des Betätigungsmittels (20) und/oder der Aktuatoreinheit (30) und/oder der Wärmetausch-, insbesondere Bypass-, Regeleinrichtung (4, 40) ausgelegt ist und die mit einem Fahrzeugdiagnosesystem (100) signalverbindbar ist. Die Erfindung führt auch auf einen Wärmetauscher (1), ein Wärmetausch-System, ein Fahrzeugdiagnosesystem (100) und auf ein Ladefluidsystem für Abgas und/oder Ladeluft sowie eine entsprechende Verwendung des Wärmetauschers (1).

## Beschreibung

Die Erfindung betrifft einen Aktuator für eine Wärmetausch-Regeleinrichtung eines oder mehrerer Fluidstrecken bei einem Wärmetauscher oder einer Baueinheit mit einem oder mehreren Wärmetauschern, aufweisend: eine Aktuatoreinheit und ein mit der Aktuatoreinheit wirkverbundenes Betätigungsmittel, das zur Betätigung der Wärmetausch-Regeleinrichtung ausgelegt ist. Weiter betrifft die Erfindung einen Wärmetauscher oder eine Baueinheit mit einem oder mehreren Wärmetauschern, zum Wärmetausch zwischen einem ersten Fluid und einem zweiten Fluid. Weiter betrifft die Erfindung ein Wärmetauschsystem, ein Fahrzeugdiagnosesystem, ein Abgasrückführsystem, ein Ladeluftzuführsystem und eine Verwendung des Wärmetauschers.

Insbesondere bei Dieselmotoren wird in zunehmendem Maß eine gekühlte Abgasrückführung zur Emissionsreduzierung eingesetzt. Dabei wird ein Teil des Verbrennungsabgases hinter dem Motor entnommen und der unverbrannten Ladeluft wieder zugeführt. Gegebenenfalls kann der Abgasstrom separat oder gemischt mit einem Ladeluftstrom dem Motor zugeführt werden. Solche und andere Ladeluftströme können einem Wärmetauscher zugeführt werden, um durch Kühlung eine möglichst niedrige Temperatur des Ladefluids zu erreichen, was für einen kraftstoffeffizienten und emissionsarmen Verbrennungsvorgang vorteilhaft ist. In Einzelfällen, insbesondere beim Kaltstart des Motors, steht die Kühlung eines Ladefluidstroms einer gewünschten Aufwärmung des Motors entgegen. In solchen Fällen ist es sinnvoll ein Ladefluid, beispielsweise ein Abgas oder eine Ladeluft dem Motor ungekühlt zuzuführen, um die Erwärmung des Motors zu beschleunigen. Bei PKW-Motoren und zunehmend auch bei leichteren Nutzkraftfahrzeugmotoren oder Verbrennungsmaschinen anderer Art setzen sich daher Wärmetauscher durch, bei denen ein Bypass für das Ladefluid zur Verfügung steht ohne dass das Ladefluid gekühlt wird. Insofern kann mittels Kühlern der vorgenannten Art oder anderen Wärmetauschern ein Ladefluid entweder ungekühlt durch den Bypass oder durch die Kühlstrecke des Wärmetauschers der Verbrennungsmaschine zugeführt werden. Ein solches erstes Fluid, beispielsweise ein Abgas und/oder eine Ladeluft, wird je nach Stellung einer Bypass-Regeleinrichtung durch den wenigstens einen Wärmetauscher und/oder den Bypass geführt. Eine Bypass-Regeleinrichtung wird mittels einem Aktuator der eingangs genannten Art betätigt. Dazu weist der Aktuator eine geeignet ausgelegte Aktuatoreinheit und ein mit der Aktuatoreinheit wirkverbundenes Betätigungsmittel auf, welches zur mittelbaren oder unmittelbaren Betätigung der Bypass-Regeleinrichtung ausgelegt ist.

Unter anderem aufgrund der zum Teil temperaturspezifischen Materialauslegung eines für den Wärmetausch ausgelegten Pfades eines Wärmetauschers und des Bypasses kann es sich als problematisch erweisen, wenn eines oder mehrere der emissionsrelevanten Bauteile nicht funktionsgerecht arbeiten. Wünschenswert wäre es, eine Funktionsstörung oder einen Schaden bei einem emissionsrelevanten Bauteil einem Fahrzeugführer und/oder einem Fahrzeugdiagnosesystem zugänglich zu machen.

An dieser Stelle setzt die Erfindung an, deren Aufgabe es ist eine Vorrichtung anzugeben, mit der eine Überwachung eines emissionsrelevanten Bauteils möglich ist.

Die Aufgabe wird durch die Erfindung mit einem Aktuator der eingangs genannten Art gelöst, bei dem erfindungsgemäß eine Sensorik vorgesehen ist, die zur Erfassung eines Zustands des Betätigungsmittels und/oder der Aktuatoreinheit und/oder der Wärmetausch-Regeleinrichtung ausgelegt ist und die mit einem Fahrzeugdiagnosesystem signalverbindbar ist.

Die Erfindung führt auch auf einen Wärmetauscher oder eine Baueinheit mit einem oder mehreren Wärmetauschern, insbesondere einem Abgas-wärmetauscher und/oder Ladeluftwärmetauscher, zum Wärmetausch zwischen einem ersten Fluid, insbesondere einem Abgas und/oder einer Ladeluft und einem zweiten Fluid, insbesondere einem Kühlmittel, welcher aufweist: eine zur Durchströmung von dem zweiten Fluid und zur Aufnahme einer Anzahl von dem ersten Fluid durchströmbarer Strömungskanäle ausgelegte Kammer; eine Anzahl von, insbesondere wenigstens zwei, zur Durchströmung von dem ersten Fluid ausgelegte, dem Wärmetauscher zugeordnete Fluidstrecken und eine Wärmetausch-Regeleinrichtung zur Einstellung der Führung des ersten Fluids durch eine erste der Fluidstrecken und/oder eine zweite der Fluidstrecken, vorzugsweise einen zur Durchströmung von dem ersten Fluid ausgelegten, dem Wärmetauscher zugeordneten Bypass und eine Bypass-Regeleinrichtung zur Einstellung der Führung des ersten Fluids durch eine Wärmetauschstrecke, insbesondere eine Kühlstrecke, des wenigstens einen Wärmetauschers und/oder Bypass-Strecke des Bypasses. Erfindungsgemäß ist darüber hinaus ein Aktuator der oben genannten Art vorgesehen, mit der die Wärmetausch-Regeleinrichtung betätigbar ist. Die Wärmetausch-Regeleinrichtung ist insbesondere als eine Bypass-Regeleinrichtung gebildet.

Grundsätzlich lassen sich Fluidführungen im Wärmetauscher für das gleiche Fluid in mehreren Fluidstrecken realisieren. Z. B. sind eine oder mehrere Fluidstrecken für ein zweites Fluid möglich, z. B. ein Kühlmittel. Oder eine oder mehrere Fluidstrecken für ein erstes Fluid sind möglich, z. B. ein Ladefluid wie Abgas, Ladeluft oder dgl., z. B. als eine oder mehrere Wärmetauschstrecken und/oder eine oder mehrere Bypass-Strecken. Vorteilhaft können z. B. eine erste und eine zweite sich in ihren thermodynamischen Eigenschaften unterscheidende Wärmetauschstrecken, z.B. für einen Hochtemperatur- bzw. Niedertemperatur-Wärmetausch, realisiert sein. Die wenigstens zwei durch die Wärmetausch-Regeleinrichtung - z.B. in Form einer Klappe oder dergleichen - betreffend die An- und/oder Durchströmung mit erstem Fluid regelbaren Fluidstrecken sind vorteilhaft weitgehend zur separaten Fluidführung des ersten Fluids voneinander getrennt und sind insbesondere unterschiedlich kühlbar und/oder weisen andere unterschiedliche thermodynamische Eigenschaften auf. Eine Wärmetauschstrecke ist vorzugsweise als Kühlstrecke ausgelegt. Vorzugsweise ist wenigstens eine Fluidstrecke für das erste Fluid eine Bypass-Strecke.

Die Erfindung geht von der Überlegung aus, dass eine wesentliche Funktionsstörung eines emissionsrelevanten Bauteils mit einer etwaigen Schadensfolge am Betätigungsmittel und/oder an der Aktuatoreinheit und/oder der Wärmetausch-Regeleinrichtung, insbesondere Bypass-Regeleinrichtung, durch eine Sensorik feststellbar ist. Die Erfindung hat darüber hinaus erkannt, dass sich eine Sensorik besonders vorteilhaft zur Erfassung eines Zustands des Betätigungsmittels und/oder der Aktuatoreinheit und/oder der Wärmetausch-Regeleinrichtung, insbesondere Bypass-Regeleinrichtung, auslegen lässt und sich dadurch die wesentlichen schadensrelevanten Funktionsstörungen bei einem emissionsrelevanten Bauteil erfassen lassen. Diesem Konzept folgend sieht die Erfindung zur Erfassung einer Funktionsstörung vor, dass die Sensorik mit einem Fahrzeugdiagnosesystem signalverbindbar ist. Vorzugsweise kann dazu der Aktuator eine Schnittstelle und/oder einen Signalbus aufweisen, der zweckmäßig mit einem Fahrzeugdiagnosesystem signalverbindbar, insbesondere kompatibel, ist.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung, sowie hinsichtlich weiterer Vorteile zu realisieren.

Gemäß einer vorteilhaften Ausführungsform ist ein Sensor als ein Magnetsensor, vorzugsweise mit einem Magneten und einem Hall-Sensor, ausgebildet.

Gemäß einer vorteilhaften Ausführungsform weist die Sensorik weitere Sensoren, insbesondere einen Temperatursensor, zur Erfassung eines Zustandes des ersten Fluids auf.

Ein Wärmetauscher gemäß dem Konzept der Erfindung weist besonders vorteilhaft einen Block mit einem Gehäuse zur Bildung der Kammer und mit der Anzahl von dem ersten Fluid durchströmbaren Strömungskanälen zur voneinander getrennten und wärmetauschenden Führung des ersten und zweiten Fluids auf. Die Strömungskanäle lassen sich beispielsweise durch Rohre, insbesondere Flachrohre, Rundrohre oder Wingletrohre, oder durch aufeinandergefügte Platten bilden. Stömungskanäle dieser oder anderer Art lassen sich vorteilhaft mit Turbulenz - oder Strömungsleitelementen versehen, z.B. Dimpel, Winglets, Noppen oder dergleichen, oder auch mit Wärmeübertragung, z.B. Oberflächen, vergrößernden Maßnahmen. Die Anzahl von Strömungskanälen läßt sich besonders kompakt in einem Gehäuse zur Bildung des Blocks unterbringen sodass eine Umströmung der Strömungskanäle durch das zweite Fluid, insbesondere ein Kühlmittel, möglich ist.

Eine zusätzliche Fluidstrecke, z.B. eine weitere Wärmetauschstrecke, insbesondere Kühlstrecke, mit anderen thermodynamischen Eigenschaften, insbesondere ein Bypass, zu einem Wärmetauscher oder einer Baueinheit mit einem oder mehreren Wärmetauschern kann grundsätzlich auf unterschiedliche Art und Weise gebildet werden. Beispielsweise kann eine zusätzliche Wärmetauschsstrecke oder ein Bypass außerhalb eines Gehäuses gebildet sein. Die Strecke oder der Bypass kann auch im Gehäuse integriert sein, beispielsweise einstückig mit einem Gehäusekörper gebildet sein. Ein besonders vorteilhaft gebildetes Bypasssystem ist beispielsweise in der angemeldeten noch nicht offengelegten Anmeldung der Anmelderin unter dem Anmeldeaktenzeichen 07-B-004 beschrieben, bei der eine Bypass-Regeleinrichtung in vorteilhafter Weise als eine Bypass-klappe gebildet und im Wärmetauscher integriert ist. Der Offenbarungsgehalt von 07-B-004 wird hiermit durch Zitat in die vorliegende Anmeldung aufgenommen. Vorzugsweise kann eine Bypass-Regeleinrichtung weiter eine Ventileinrichtung, insbesondere ein Abgasrückführventil aufweisen.

Eine Baueinheit mit mehreren Wärmetauschern und ein Abgasrückführsystem und ein Ladeluftzuführsystem ist beispielsweise in der angemeldeten noch nicht offengelegten Anmeldung der Anmelderin unter dem Anmeldeaktenzeichen 06-B-243 grundsätzlich beschrieben - in besonders vorteilhafter Weise ist ein Hochtemperaturwärmetauscher und ein Niedertemperaturwärmetauscher mit einem Bypass versehen. Der Offenbarungsgehalt von 06-B-243 wird hiermit durch Zitat in die vorliegende Anmeldung aufgenommen.

Es bestehen grundsätzlich vielfältige Möglichkeiten eine Fluidführung und Möglichkeiten von Fluidzuführungen/Abführungen im Wärmetauscher zu realisieren - diese werden nicht alle im Einzelnen beschrieben. Beispielsweise kann ein erstes Fluid und ein zweites Fluid separat und fluiddicht voneinander getrennt durch einen Boden oder Flansch entlang einer Längsachse des Wärmetauschers zu- und abgeführt werden.

In besonders vorteilhafter Weise weist ein Wärmetauscher jeweils einen separaten, in Bezug auf das erste Fluid eintrittsseitigen und/oder austrittsseitigen ersten Fluidanschluss für das erste Fluid auf. Vorteilhaft ist der erste Fluidanschluss als ein Kasten und/oder ein Kastendeckel gebildet, welcher mittels der Strömungskanäle strömungsverbunden ist. Insbesondere kann ein erster Fluidanschluss in Form eines Diffusors, vorteilhaft als ein Eintrittsdiffusor und/oder Austrittsdiffusor, gebildet sein.

Ein vorteilhafter Wärmetauscher weist auch einen Fluidanschluss für das zweite Fluid auf, insbesondere einen Stutzen, vorteilhaft einen einstückig mit dem Gehäuse gebildeten zweiten Fluidanschluss. Durch solche und andere vorteilhafte Weise lässt sich ein Kühlmittel besonders zweckmäßig dem Block des Wärmetauschers zuführen.

Im Rahmen einer besonders bevorzugten Weiterbildung der Erfindung hat es sich als zweckmäßig herausgestellt, dass die Regeleinrichtung und/oder der Aktuator am ersten, vorzugsweise eingangsseitigen, Fluidanschluss angebracht, besonders bevorzugt wenigstens teilweise integriert ist.

In besonders zweckmäßiger Weise lässt sich eine Wärmetausch-Regeleinrichtung in Form einer Bypassklappe realisieren. Eine Bypassklappe und/oder eine Aktuatoreinheit und/oder ein mit der Aktuatoreinheit wirkverbundenes Betätigungsmittel lässt sich besonders zweckmäßig im ersten Fluidanschluss und/oder zweiten Fluidanschluss, vorteilhaft in einem Diffusor integrieren.

Zur Anbindung der Strömungskanäle an einen Fluidanschluss hat es sich als vorteilhaft erwiesen, dass ein Blockabschlusselement zur Trennung der Kammer und eines ersten Fluidanschlusses für das erste Fluid an einem Gehäuse angeordnet ist. Vorteilhaft ist das Blockabschlusselement, insbesondere ein Boden, mit einer oder mit mehreren Durchgangsöffnungen für die Strömungskanäle versehen.

Ein Gehäuse und/oder eine oder mehrere Wärmetauschstrecken und/oder ein Bypass bei einem erfindungsgemäßen Wärmetauscher mit einem erfindungsgemäßen Aktuator lässt sich in vorteilhafter Weise in Form eines Gussteils, insbesondere eines Feingussteils, Druckgussteils oder Spritzgussteils zur Verfügung stellen. Es hat sich als besonders vorteilhaft erwiesen, ein Gehäuse und/oder eine zusätzliche Wärmetauschstrecke und/oder einen Bypass in Form eines Aluminium- oder Stahl- oder Kunststoffteils zu bilden. Die Auswahl des Materials lässt sich je nach Wärmebelastung des entsprechenden Bereichs des Wärmetauschers auswählen.

Vorteilhafte Weiterbildungen der Erfindung hinsichtlich des Aktuators sind den weiteren Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Dem Konzept der Erfindung folgend lässt sich durch die Sensorik der Zustand des Betätigungsmittels und/oder der Aktuatoreinheit und/oder der Bypass-Regeleinrichtung einzeln oder insgesamt bzw. auch in beliebiger Zweierkombinationen erfassen. Als besonders zweckmäßig hat sich eine Sensorik zur Erfassung eines Zustands des Betätigungsmittels und/oder der Aktuatoreinheit erwiesen. Die Weiterbildung hat an dieser Stelle erkannt, dass durch eine Zustandsüberwachung des Betätigungsmittels und/oder der Aktuatoreinheit - vorzugsweise beider - eine Diagnose der wesentlichen Schadensfälle oder Funktionsstörungen möglich ist. Eine besonders bevorzugte Ausführungsform dieser Weiterbildung ist im Einzelnen der Zeichnung zu entnehmen. Insbesondere hat es sich als vorteilhaft erwiesen, eine Sensorik vorzusehen, die nicht nur zur Erfassung eines Zustands des Betätigungsmittels, sondern zusätzlich auch der Aktuatoreinheit ausgelegt ist.

In besonders vorteilhafter Weise sieht die Sensorik wenigstens einen Sensor, vorzugsweise zwei Sensoren vor, die zur Erfassung eines Zustands, insbesondere einer Stellung, des Betätigungsmittels ausgelegt sind. Vorteilhaft lässt sich dadurch eine Stellung des Betätigungsmittels erfassen, die entweder - zum einen - einen ersten wärmetauschenden Pfad des Wärmetauschers öffnet und einen zweiten wärmetauschenden Pfad und/oder einen Bypass-Pfad ganz oder teilweise schließt oder - zum anderen - einen zweiten wärmetauschenden Pfad und/oder Bypass-Pfad des Wärmetauschers öffnet und/oder einen wärmetauschenden Pfad des Wärmetauschers ganz oder teilweise schließt. In einer zuvor erläuterten besonders bevorzugten Weiterbildung der Erfindung weist die Sensorik zusätzlich wenigstens einen weiteren Sensor auf, der zur Erfassung eines Zustands, insbesondere einer Stellung, der Aktuatoreinheit ausgelegt ist. Aufgrund der durch den weiteren Sensor zur Verfügung gestellten Information lässt sich vergleichsweise zuverlässig praktisch jeder Schadensfall bei einer Wärmetausch-, insbesondere Bypass-, Regeleinrichtung und/oder einer zusätzlichen Wärmetauschsstrecke und/oder einem Bypass feststellen und einem Fahrzeugdiagnosesystem mitteilen. Die Sensorik, insbesondere die Sensoren für das Betätigungsmittel und/oder die Aktuatoreinheit, weist dazu zweckmäßigerweise eine Schnittstelle und/oder eine Signalbusverbindung zu einem Fahrzeugdiagnosesystem auf bzw. sind mit diesen verbunden.

In einer besonders bevorzugten Weiterbildung der Erfindung ist zusätzlich zur Sensorik ein Sicherungsmittel vorgesehen, das ausgelegt ist, den Aktuator in einem nicht betätigten Zustand zu halten, welcher einer Kühlfunktion des Wärmetauschers entspricht. Mit anderen Worten, ein Aktuator ist gemäß dieser Weiterbildung in einem nicht betätigten Zustand so geschaltet, dass das erste Fluid einem wärmetauschenden Pfad des Wärmetauschers zugeführt wird. Als besonders zweckmäßig hat sich ein Sicherungsmittel mit einer Feder erwiesen, vorzugsweise einer am Betätigungsmittel angreifenden Feder, die das Betätigungsmittel des Aktuators in einer den wärmetauschenden Pfad des Wärmetauschers öffnenden Stellung hält.

Bei der zuvor erläuterten Weiterbildung hat es sich als besonders zweckmäßig erwiesen, den Schadensfall oder eine Funktionsstörung des Aktuators einem Fahrzeugdiagnosesystem zur Verfügung zu stellen. Sollte bei einer Funktionsstörung oder einem Schadensfall das Sicherungsmittel nicht in der Lage sein, den Aktuator in einer Stellung zur Öffnung des wärmetauschenden Pfades des Wärmetauschers zu halten, sieht die Sensorik wenigstens einen Sensor vor, welcher die nicht funktionsgerechte Stellung des Betätigungsmittels und/oder des Aktuators detektiert. Eine Zuführung von überhitztem Ladefluid, beispielsweise einem Abgas und/oder einer Ladeluft, zum Bypass wird aufgrund der Funktionsund/oder Schadensmeldung des Fahrzeugdiagnosesystems Einhalt geboten. Es hat sich als zweckmäßig erwiesen, in einer Sensorik vorteilhaft weitere Sensoren zur Erfassung eines Zustandes des ersten Fluids vorzusehen, beispielsweise einen Temperatursensor. Vorteilhafterweise kann durch einen oder mehrere solcher weiteren Sensoren die Funktionsstörung näher spezifiziert und/oder verifiziert werden.

Es hat sich als besonders vorteilhaft erwiesen, eine Aktuatoreinheit als Unterdruckaktuator, insbesondere mit einer Unterdruckdose zu verwirklichen. Eine Unterdruckdose weist vorteilhaft eine Kammer und einen in der Kammer beweglich angeordneten Unterdruckgeber, vorzugsweise einen Unterdruckteller und/oder eine Unterdruckmembran, auf. Ein Betätigungsmittel ist vorteilhaft mit einem Gestänge gebildet, insbesondere einem Hebelsystem, dass mit einer Schubstange und einem Hebelarm gebildet ist. Eine die Hebelarme eines Hebelsystems bildende Schubstange und der Hebelarm können insbesondere durch ein Kugelkopfgelenk miteinander verbunden sein. Es hat sich gezeigt, dass diese Art einer Aktuatoreinheit mechanisch besonders zuverlässig und temperaturbeständig ist, darüber hinaus lässt sich in konstruktiv besonders vorteilhafter Weise eine Schubstange mit einem Unterdruckgeber und/oder ein Hebelarm mit einer Bypass-Klappe, insbesondere über eine Welle, wirkverbinden. Eine besonders bevorzugte Ausführungsform dieser Weiterbildung ist im Einzelnen in der Zeichnung beschrieben.

Darüber hinaus ist das Konzept der Erfindung nicht beschränkt auf eine zuvor erläuterte Aktuatoreinheit und ein zuvor erläutertes Betätigungsmittel. Vielmehr lässt sich ein Aktuator auf eine zur Betätigung einer Wärmetausch-, insbesondere Bypass-Regeleinrichtung eines Bypasses, bei einem Wärmetauscher oder eine Baueinheit mit einem oder mehreren Wärmetauschern zweckmäßigerweise bilden - möglich ist beispielsweise auch ein auf einer elektrischen Bauweise beruhender Aktuator oder ein auf einer pneumatischen Bauweise beruhender Aktuator oder ein auf einer hydraulischen Bauweise beruhender Aktuator mit entsprechend ausgelegten Betätigungsmitteln zur Betätigung der Bypass-Regeleinrichtung.

Gemäß einer bevorzugten Ausführungsform ist ein Gehäuse und/oder ein Bypass in Form eines Gussteils, insbesondere eines Feinguss-, Druckguss- oder Spritzguss-Teils, vorzugsweise in Form eines Aluminium-, oder Stahl- oder Kunststoffteils gebildet.

Gemäß einer bevorzugten Ausführungsform weist der Wärmetauscher einen Hochtemperatur-Wärmetauscher und/oder einen Niedertemperatur-Wärmetauscher auf.

Das Konzept der Erfindung führt auch auf ein System mit einem Wärmetauscher oder eine Baueinheit mit einem oder mehreren Wärmetauschern, insbesondere einem Abgaswärmetauscher und/oder einem Ladeluftwärmetauscher, zum Wärmetauschen zwischen einem ersten Fluid, insbesondere einem Abgas oder eine Ladeluft, und einem zweiten Fluid, insbesondere einem Kühlmittel, aufweisend:
- eine zur Durchströmung von dem zweiten Fluid und zur Aufnahme einer Anzahl von dem ersten Fluid durchströmbarer Strömungskanäle ausgelegte Kammer;
- eine Anzahl von, insbesondere wenigstens zwei, zur Durchströmung von dem ersten Fluid ausgelegte, dem Wärmetauscher zugeordnete Fluidstrecken und eine Wärmetausch-Regeleinerichtung zur Einstellung der Führung des ersten Fluids durch eine erste der Fluidstrecken und/oder eine zweite der Fluidstrecken, insbesondere
   einen zur Durchströmung von dem ersten Fluid ausgelegten Kammer dem Wärmetauscher zugeordneten Bypass und eine Bypass-Regeleinrichtung zur Einstellung der Führung des ersten Fluids durch eine Wärmetauscherstrecke, insbesondere Kühlstrecke, des wenigstens einen Wärmetauschers und/oder einer Bypassstrecke des Bypasses; wobei erfindungsgemäß vorgesehen ist, dass die Wärmetausch-Regeleinrichtung mit einem Aktuator gemäß dem oben erläuterten Konzept der Erfindung wirkverbunden ist und die Sensorik mit einem Fahrzeugdiagnosesystem signalverbunden ist.

Darüber hinaus führt das Konzept der Erfindung auf ein Fahrzeugdiagnosesystem mit einer Signalverbindung zu einem Aktuator gemäß dem Konzept der Erfindung.

Die Erfindung führt auch auf ein Abgasrückführsystem für eine Brennkraftmaschine, aufweisend eine Abgasrückführung, einen Kompressor und einen erfindungsgemäßen Wärmetauscher oder Baueinheit von Wärmetauschern in Form eines Abgaswärmetauschers, insbesondere Kühlers.

Die Erfindung führt auch auf ein Ladeluftzuführsystem für eine Brennkraftmaschine, aufweisend eine Ladeluftansaugung, einen Luftfilter, ein Kompressor und einen erfindungsgemäßen Wärmetauscher oder Baueinheit von Wärmetauschern in Form eines Ladeluftwärmetauschers, insbesondere -kühlers.

Die Erfindung führt auch auf eine Verwendung des Wärmetauschers oder der Baueinheit gemäß dem Konzept der Erfindung für eine Brennkraftmaschine, insbesondere einen Dieselmotor oder Ottomotor eines Kraftfahrzeugs.

Ein Ausführungsbeispiel der Erfindung wird nun nachfolgend anhand der Zeichnung beschrieben. Diese soll das Ausführungsbeispiel nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1:: eine Ansicht eines Wärmetauschers gemäß einer bevorzugten Ausführungsform der Erfindung mit einem Aktuator für eine Bypass-Regeleinrichtung eines Bypasses des Wärmetauschers in zwei Stellungen (Ansicht (A) und (B));
- Fig. 2:: fünf unterschiedliche Stellungen (A)-(E) mit mögliche Ausfälle darstellenden Stellungen (C)-(E) bei einem schematisch dargestellten Aktuator als eine besonders bevorzugte Ausführungsform der Erfindung.

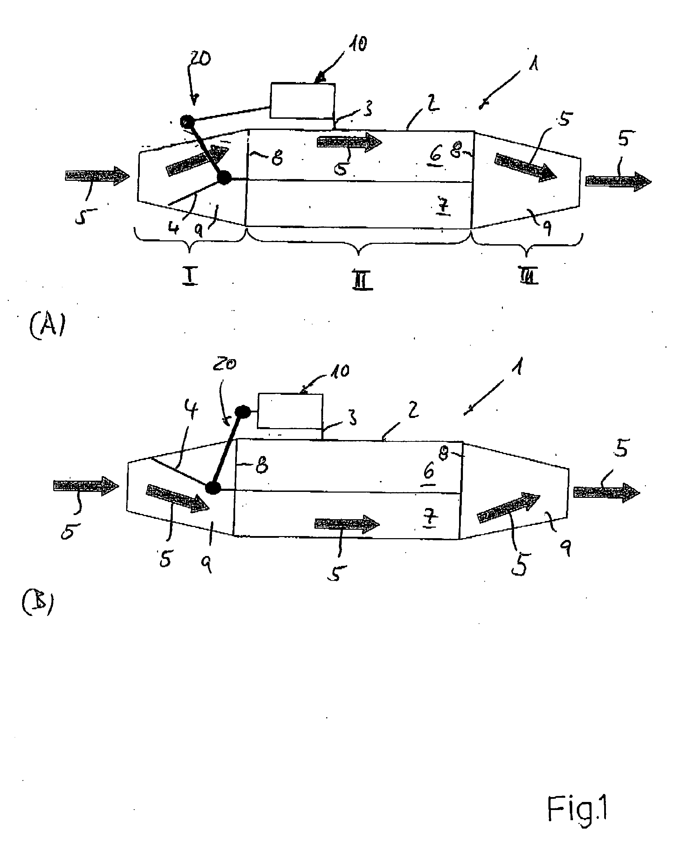

Fig. 1 zeigt schematisch einen Wärmetauscher 1 mit einem am Gehäuse 2 des Wärmetauschers 1 durch ein Haltemittel 3 angebrachten Aktuator 10 zur Betätigung einer Bypass-Regeleinrichtung 4 in Form einer Bypass-Klappe zur Einstellung der Führung eines Ladefluids 5, vorliegend eines Abgases, durch den Wärmetauscher 1 - nämlich einer Kühlstrecke 6 des Wärmetauschers - und/oder einer Bypass-Strecke 7, welche vorliegend in einem nicht näher dargestellten Block von Strömungskanälen für ein Ladefluid im Gehäuse 2 des Wärmetauschers 1 untergebracht sind. Die Kühlstrecke 6 des Wärmetauschers 1 bildet im Gehäuse 2 des Wärmetauschers 1 eine Kammer zur Aufnahme einer nicht näher dargestellten Anzahl von durch Ladefluid durchströmbaren Strömungskanäle, die in dem nicht näher dargestellten Block angeordnet und endseitig in Durchgangsöffnungen eines als Boden gebildeten Blockabschlusselements 8 gehalten sind. Die Kühlmittelführung und Kühlmittelanschlüsse sind vorliegend nicht im Einzelnen gezeigt. Das Blockabschlusselement 8 dient zur Trennung der Kammer 6 und eines Fluidanschlusses 9, der vorliegend als Diffusor gebildet ist. Im eingangsseitigen Diffusor, d.h. im Abschnitt I des Wärmetauschers 1 ist vorliegend die Bypass-Regeleinrichtung 4 in Form der Bypassklappe integriert. Im Abschnitt II des Wärmetauschers 1 ist der Bypasspfad 7 und der Kühlpfad 6 der Wärmetauschers 1 angeordnet. Im Abschnitt III des Wärmetauschers 1 ist ein weiterer Fluidanschluss 9 in Form eines Austrittsdiffusors gebildet, durch den das Ladefluid den Wärmetauscher gekühlt verlässt für den Fall, dass das Ladefluid 5 den Kühlpfad 6 durchlaufen hat oder ungekühlt verlässt für den Fall, dass das Ladefluid den Bypasspfad 7 durchlaufen hat.

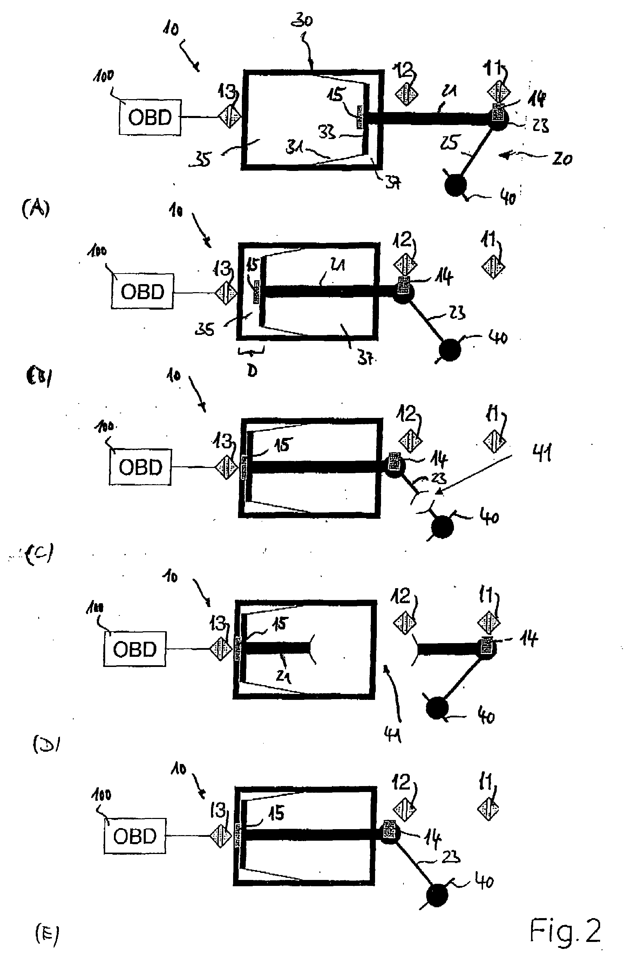

In Ansicht (A) der Fig. 1 ist der Wärmetauscher 1 mit dem Aktuator 10 in einem Zustand dargestellt, bei welchem die Regeleinrichtung 4 in Form der Bypass-Klappe durch den Aktuator 10 in einem nicht betätigten Zustand gehalten ist - vorliegend entspricht dies einer Kühlfunktion des Wärmetauschers 1. Dazu wird eine entsprechende in Fig. 2 in Ansicht (A) dargestellte Stellung des Aktuators 10 durch ein in Fig. 2 näher gezeigtes Betätigungsmittel in Form eines Hebel-Gestänges auf die Bypass-Regeleinrichtung 4 übertragen.

In Ansicht (B) ist der Wärmetauscher 1 in einem Zustand gezeigt, welcher einer Bypassfunktion des Wärmetauschers 1 entspricht. Dazu ist der Aktuator 10 in einer Stellung gehalten, die in Fig. 2 Ansicht (B) näher gezeigt ist, wobei dieser Zustand wiederum durch das in Fig. 2 näher gezeigte Gestänge 20 auf die Bypass-Regeleinrichtung 4 übertragen ist.

Fig. 2 zeigt einen Aktuator 10 als Teil eines nicht näher bezeichneten Bypass-Systems zur Integration bei einem Wärmetauscher 1, wie er beispielhaft als besonders bevorzugte Ausführungsform in Fig. 1 gezeigt ist. Der Aktuator 10 ist mit einem Fahrzeugdiagnosesystem (On Bord Diagnose-OBD) über eine vorliegend mit drei Sensoren 11, 12, 13 gebildete Sensorik verbunden. Die vorliegend als Hall-Sensoren ausgebildeten Sensoren 11, 12, 13 wirken jeweils mit einem Magneten 14, 15 zusammen. Über die gegenseitige Positionierung von Sensoren 11, 12, 13 einerseits und Magneten 13, 14 andererseits und der diesen Positionierungen zugeordneten Stellungen eines Betätigungsmittels 20 und einer Aktuatoreinheit 30 wird eine Funktionsstörung bzw. eine ordentliche Funktion des Aktuators und/oder der - vorliegend symbolisch dargestellten - Bypass-Regeleinrichtung 40 in Form einer Bypass-Klappe erkannt. Dabei wirkt der Magnet 14 mit den Sensoren 11, 12 zusammen und ist am Betätigungsmittel, das vorliegend in Form eines Hebel-Gestänges gebildet ist, angeordnet. Der Magnet 15 wirkt mit dem Sensor 13 zusammen und ist vorliegend an einem Unterdruckgeber bei einer vorliegend als Unterdruckdose gebildeten Aktuatoreinheit 30 angeordnet. Vorliegend sind alle Sensoren 11, 12, 13 mit dem Fahrzeugdiagnosesystem 100 signalverbunden.

Die Unterdruckdose der Aktuatoreinheit 30 bildet vorliegend eine Kammer mit einem darin beweglich angeordneten Unterdruckgeber 31, der vorliegend in Form eines an einer Unterdruckmembran 31 angeordneten Unterdrucktellers 33 gebildet ist - der Magnet 15 ist am Unterdruckteller 33 angebracht. Die Kammer weist einen ersten mit Unterdruck beaufschlagbaren Teil 35 und einen zweiten mit Umgebungsdruck beaufschlagbaren Teil 37 auf. Unter Wirkung eines durch eine Feder gebildeten, nicht näher dargestellten, Sicherheitsmittels und der damit aufgebrachten Federkraft ist bei der in Ansicht (A) der Fig. 2 gezeigten Stellung des Unterdruckaktuators die als Bypass-Klappe gebildete Bypass-Regeleinrichtung 40 zur Freigabe eines wärmetauschenden Pfades in Form einer Kühlstrecke 6 eines Wärmetauschers 1 eingestellt. Dazu wird der Unterdruckaktuator über das Hebelsystem des Betätigungsmittels 20 infolge der erläuterten Federkraft - in Fig. 2 - nach rechts gezogen. Dabei ist das Hebelsystem vorliegend mittels einer am Unterdruckaktuator festgemachten Schubstange 21 und vorliegend eines mit der Schubstange 21 durch ein Kugelkopf- oder anderes Gelenk oder eine mechanische Verbindung 23 verbundenen Hebelarms 25 gebildet. Der am Kugelkopf 23 festgemachte Magnet 14 befindet sich vorliegend gegenüber dem als Hall-Sensor ausgebildeten Sensor 11, was zur Weitergabe eines den funktionsgerechten Wärmetauscherbetrieb anzeigenden Signals an das Fahrzeugdiagnosesystem 100 führt. Andere hier nicht näher beschriebene Alternativen oder abgewandelte Betätigungsmittel und/oder Hebelsysteme sind im Rahmen des Konzepts der Erfindung ebenfalls realisierbar.

In Ansicht (B) der Fig. 2 ist eine funktionsgerechte Stellung des Aktuators 10 gezeigt, welche dem Bypass-Betrieb des Wärmetauschers 1 entspricht. Dabei ist die als Bypass-Klappe gebildete Bypass-Regeleinrichtung 40 entsprechend in einer Stellung, die den wärmetauschenden Pfad, insbesondere die Kühlstrecke, des Wärmetauschers 1 weitgehend schließt und den eine Bypassstrecke 7 des Bypasses weitgehend freigibt. Dazu ist der Teil 35 der Kammer mit Unterdruck beaufschlagt, so dass - unter Wirkung des Umgebungsdrucks im Teil 37 der Kammer und gegen die auf das Hebelsystem 20 wirkende Federkraft - die Schubstange 21 den Unterdruckgeber 31 - in Fig. 2 - nach links schiebt und der Magnet 14 gegenüber dem als Hall-Sensor ausgebildeten Sensor 12 positioniert ist. In der in Ansicht (B) der Fig. 2 gezeigten Stellung ist der Magnet 15 durch einen Abstand D vom zugeordneten als Hall-Sensor ausgebildeten Sensor 13 beabstandet, so dass ein Kontaktsignal zwischen Sensor 13 und Magnet 15 nicht zustande kommt. Das die ordnungsgemäße Funktion anzeigende, durch die Positionierung des Magneten 14 gegenüber dem Sensor 12 ausgelöste, Signal wird an das Fahrzeugdiagnosesystem 100 weitergegeben.

Zur Verifizierung dieses Ergebnisses kann vorteilhaft ein weiterer nicht näher dargestellter Sensor zur Detektion einer Temperatur des im Bypass befindlichen Fluids, vorliegend Abgas, dienen. Ein solcher Sensor misst vorliegend eine Fluidtemperatur. Für den Fall, dass die Temperatur des Abgases im Bypass ausreichend gering ist um zum einen unbedenklich für das Konstruktionsmaterial des Bypasses zu sein und zum anderen die Bypass-Funktion zum Betrieb des Motors zu rechtfertigen, wird ein die ordnungsgemäße Funktion bestätigendes Signal an das Fahrzeugdiagnosesystem 100 weitergeben.

In Ansicht (C) der Fig. 2 ist ein durch einen Bruch 41 bewirkter Schadensfall im Hebelarm 23 des Aktuators 10 dargestellt. Dies führt dazu, dass die Bypass-Klappe 40 in einer den Bypass freigebenden und den wärmetauschenden Pfad des Wärmetauschers 1 schließenden Stellung verbleibt. Bei fehlender Raststellung des Hebelsystems 23 wird eine überschlagende Stellung des Hebelsystems unter Wirkung des Umgebungsdrucks im Teil 37 - gegenüber dem Unterdruck im Teil 35 - der Kammer bewirkt. Der Magnet 15 kontaktiert den als Hall-Sensor ausgebildeten Sensor 13 und der Magnet 14 wird über die Position des als Hall-Sensor ausgebildeten Sensors 12 hinausgeschoben. Diese Stellung bewirkt eine durch die Sensoren 11, 12 und 13 hervorgerufene Signalkombination, welche an ein Fahrzeugdiagnosesystem 100 als Signal weitergeleitet wird und den zuvor erläuterten Schadensfall anzeigt.

Eine gleiche Signalkombination ist zu erwarten, wenn - wie in Ansicht (E) der Fig. 2 dargestellt - ein Bruch zwischen der als Bypass-Klappe ausgebildeten Regeleinrichtung 40 und dem Hebelarm 23 vorliegt. Auch in diesem Fall liefert der Sensor 11, 12 kein Kontaktsignal während der Sensor 13 ein Kontaktsignal liefert, was den zuvor erläuterten Schadensfall anzeigt.

In Ansicht (D) der Fig. 2 ist ein weiterer durch einen Bruch in der Schubstange 21 gewirkter Schadensfall dargestellt, der zur Folge hat, dass über die als Sicherungsmittel dienende Feder das Hebelsystem in eine Stellung gebracht wird, welche es der Bypass-Klappe ermöglicht, den wärmetauschenden Pfad des Wärmetauschers 1 zu öffnen und so eine Überhitzung des Bypass-Kanals zu vermeiden. Bei einem Bruch 41 der Schubstange 21 wird aufgrund des Unterdrucks im Teil 35 der Kammer der Magnet 15 unter Überschreitung des Abstandes D in Kontakt mit dem als Hall-Sensor ausgebildeten Sensor 13 gebracht und der Magnet 14 wird gegenüber dem als Hall-Sensor ausgebildeten Sensor 11 positioniert. Im vorliegenden Fall liefert - im Unterschied zu den in Ansichten (C) und (E) dargestellten Schadensfällen - sowohl der Sensor 11 als auch der Sensor 13 ein Kontaktsignal, was als Signal an das Fahrzeugdiagnosesystem 100 weitergegeben wird und die in Ansicht (D) dargestellte Schadenssituation anzeigt.

Die Erfindung betrifft einen Aktuator 10 für eine Wärmetausch-, insbesondere Bypass-, Regeleinrichtung 4, 40, eines oder mehrerer Fluidstrecken, insbesondere umfassend einen Bypass, bei einem Wärmetauscher 1 oder einer Baueinheit mit einem oder mehreren Wärmetauschern, aufweisend: eine Aktuatoreinheit 30 und ein mit der Aktuatoreinheit 30 wirkverbundenes Betätigungsmittel 20, das zur Betätigung der Wärmetausch-, insbesondere Bypass-, Regeleinrichtung 4, 40 ausgelegt ist. Um eine Überwachung der emissionsrelevanten Bauteile insbesondere im Schadensfall zu ermöglichen sieht die Erfindung eine Sensorik vor, die zur Erfassung eines Zustands des Betätigungsmittels 20 und/oder der Aktuatoreinheit 30 und/oder der Regeleinrichtung 4, 40 ausgelegt ist und die mit einem Fahrzeugdiagnosesystem 100 signalverbindbar ist. Die Erfindung führt auch auf einen Wärmetauscher 1, ein Wärmetausch-System, ein Fahrzeugdiagnosesystem und auf ein Ladefluidsystem für Abgas und/oder Ladeluft sowie eine entsprechende Verwendung des Wärmetauschers 1.

## Patentansprüche

1. Aktuator (10) für eine Wärmetausch-Regeleinrichtung (4, 40) einer oder mehrerer Fluidstrecken, insbesondere umfassend eine Bypassstrecke und wenigstens eine Kühlstrecke, bei einem Wärmetauscher (1) oder einer Baueinheit mit einem oder mehreren Wärmetauschern (1), aufweisend:
- eine Aktuatoreinheit (30) und ein mit der Aktuatoreinheit (30) wirkverbundenes Betätigungsmittel (20), das zur Betätigung der Wärmetausch-Regeleinrichtung (4, 40) ausgelegt ist;
- eine Sensorik, die zur Erfassung eines Zustands des Betätigungsmittels (20) und/oder der Aktuatoreinheit (30) und/oder der Wärmetausch-Regeleinrichtung (4, 40) ausgelegt ist und die mit einem Fahrzeug-Diagnosesystem (100) signalverbindbar ist.

2. Aktuator (10) nach Anspruch 1,
**dadurch gekennzeichnet, dass**
die Aktuatoreinheit (30) einen Unterdruckaktuator aufweist, insbesondere mit einer Kammer und einem darin beweglich angeordneten Unterdruckgeber (31), vorzugsweise aufweisend einen Unterdruckteller (33) und/oder eine Unterdruckmembran.

3. Aktuator (10) nach Anspruch 1 oder 2,
**dadurch gekennzeichnet, dass**
die Wärmetausch-Regeleinrichtung (4, 40) eine Klappe aufweist, insbesondere eine im Wärmetauscher (1) integrierte Klappe, vorzugsweise eine Bypass-Klappe.

4. Aktuator (10) nach einem der Ansprüche 1 bis 3,
**dadurch gekennzeichnet, dass**
das Betätigungsmittel (20) ein Gestänge aufweist, insbesondere ein Hebelsystem, das mit einer Schubstange (21) und einem Hebelarm (25) gebildet ist, welche insbesondere durch ein Kugelkopf-Gelenk (23) miteinander verbunden sind.

5. Aktuator (10) nach einem der Ansprüche 1 bis 4,
**dadurch gekennzeichnet, dass**
eine Schubstange (21) mit einem Unterdruckgeber (31) und/oder ein Hebelarm (25) mit einer Klappe, insbesondere über eine Welle, wirkverbunden ist.

6. Aktuator (10) nach einem der Ansprüche 1 bis 5,
**dadurch gekennzeichnet, dass**
ein Sicherungsmittel ausgelegt ist, den Aktuator (10) in einem nichtbetätigten Zustand zu halten, welcher einer Kühlfunktion des Wärmetauschers (1) entspricht, insbesondere das Sicherungsmittel eine Feder aufweist, insbesondere eine am Betätigungsmittel (20) angreifende Feder.

7. Aktuator (10) nach einem der Ansprüche 1 bis 6,
**dadurch gekennzeichnet, dass**
die Sensorik wenigstens einen Sensor (11, 12, 13) aufweist, vorzugsweise zwei Sensoren (11, 12), der/die zur Erfassung eines Zustands, insbesondere Stellung, des Betätigungsmittels (20) oder der Aktuatoreinheit (30), insbesondere eines in einer Kammer der Aktuatoreinheit (30) beweglich angeordneten Unterdruckgebers (31), ausgelegt ist/sind.

8. Wärmetauscher (1) oder Baueinheit mit einem oder mehreren Wärmetauschern, insbesondere Abgas-Wärmetauscher und/oder Ladeluft-Wärmetauscher, zum Wärmetausch zwischen einem ersten Fluid, insbesondere einem Abgas und/oder einer Ladeluft, und einem zweiten Fluid, insbesondere einem Kühlmittel, aufweisend:
- eine zur Durchströmung von dem zweiten Fluid und zur Aufnahme einer Anzahl von dem ersten Fluid durchströmbarer Strömungskanäle ausgelegte Kammer;
- eine Anzahl von, insbesondere wenigstens zwei, zur Durchströmung von dem ersten Fluid ausgelegte, dem Wärmetauscher (1) zugeordnete Fluidstrecken und eine Wärmetausch-Regeleinrichtung (4, 40) zur Einstellung der Führung des ersten Fluids durch eine erste der Fluidstrecken und/oder eine zweite der Fluidstrecken, vorzugsweise
einen zur Durchströmung von dem ersten Fluid ausgelegten, dem Wärmetauscher (1) zugeordneten Bypass und eine Bypass-Regeleinrichtung (4, 40) zur Einstellung der Führung des ersten Fluids durch eine Wärmetauschstrecke, insbesondere eine Kühlstrecke (6), des wenigstens einen Wärmetauschers (1) und/oder einer Bypass-Strecke (7) des Bypasses,
**gekennzeichnet durch**
einen Aktuator (10) nach einem der Ansprüche 1 bis 7, mit dem die Wärmetausch-Regeleinrichtung (4, 40) betätigbar ist.

9. Wärmetauscher (1) oder Baueinheit nach Anspruch 8,
**dadurch gekennzeichnet, dass**
die Wärmetausch-Regeleinrichtung (4, 40) weiter eine Ventileinrichtung, insbesondere ein Abgasrückführventil, aufweist.

10. Wärmetauscher (1) oder Baueinheit nach einem der Ansprüche 8 bis 9,
**gekennzeichnet durch**
jeweils einen separaten in Bezug auf das erste Fluid eintrittsseitigen und/oder austrittsseitigen ersten Fluidanschluss für das erste Fluid, insbesondere einen Kastendeckel, welcher mit den Strömungskanälen strömungsverbunden ist, vorzugsweise in Form eines Diffusors, insbesondere eines Eintrittsdiffusors und/oder Austrittsdiffusors.

11. Wärmetauscher (1) oder Baueinheit nach einem der Ansprüche 8 bis 10,
**dadurch gekennzeichnet, dass**
die Regeleinrichtung (4, 40) und/oder der Aktuator (10) am ersten, vorzugsweise eingangsseitigen, Fluidanschluss (9) angebracht, insbesondere integriert ist, wobei eine Klappe und/oder eine Aktuatoreinheit (30) und/oder ein mit der Aktuatoreinheit (30) wirkverbundenen Betätigungsmittel (20) wenigstens teilweise in einem Diffusor integriert ist.

12. Wärmetauscher (1) oder Baueinheit nach einem der Ansprüche 8 bis 11,
**dadurch gekennzeichnet, dass**
ein Blockabschlusselement (8) zur Trennung der Kammer und eines ersten Fluidanschlusses (9) für das erste Fluid an einem Gehäuse (2) angeordnet ist, wobei das Blockabschlusselement (8), insbesondere ein Boden, mit einer oder mit mehreren Durchgangsöffnungen für die Strömungskanäle versehen ist.

13. Wärmetausch-System mit einem Wärmetauscher (1) oder Baueinheit mit einem oder mehreren Wärmetauschern, insbesondere Abgas-Wärmetauscher und/oder Ladeluft-Wärmetauscher, zum Wärmetausch zwischen einem ersten Fluid, insbesondere einem Abgas oder einer Ladeluft, und einem zweiten Fluid, insbesondere einem Kühlmittel, aufweisend:
- eine zur Durchströmung von dem zweiten Fluid und zur Aufnahme einer Anzahl von dem ersten Fluid durchströmbarer Strömungskanäle ausgelegte Kammer;
- eine Anzahl von, insbesondere wenigstens zwei, zur Durchströmung von dem ersten Fluid ausgelegte, dem Wärmetauscher (1) zugeordnete Fluidstrecken und eine Wärmetausch-Regeleinrichtung (4, 40) zur Einstellung der Führung des ersten Fluids durch eine erste der Fluidstrecken und/oder eine zweite der Fluidstrecken, vorzugsweise
einen zur Durchströmung von dem ersten Fluid ausgelegten, dem Wärmetauscher (1) zugeordneten Bypass und eine Bypass-Regeleinrichtung (4, 40) zur Einstellung der Führung des ersten Fluids durch eine Wärmetauschstrecke, insbesondere eine Kühlstrecke (6), des wenigstens einen Wärmetauschers (1) und/oder einer Bypass-Strecke (7) des Bypasses;
**dadurch gekennzeichnet, dass**
die Wärmetausch-Regeleinrichtung (4, 40) mit einem Aktuator (10) nach einem der Ansprüche 1 bis 7 wirkverbunden ist und die Sensorik mit einem Fahrzeug-Diagnosesystem signalverbunden ist.

14. Fahrzeugdiagnosesystem (100) aufweisend eine Signalverbindung zu einem Aktuator (10) nach einem der Ansprüche 1 bis 7.

15. Abgasrückführ- und/oder Ladeluftzuführsystem für eine Brennkraftmaschine, aufweisend eine Abgasrückführung und/oder Ladeluftansaugung insbesondere mit einem Luftfilter, einen Kompressor und **gekennzeichnet durch**
einen Wärmetauscher (1) oder Baueinheit, nach einem der Ansprüche 8 bis 12 in Form eines Abgas- und/oder LadeluftWärmetauschers, insbesondere -Kühlers.
